# FASCICULE DE BREVET EUROPEEN

(11) **EP 4 147 033 B1**
(45) Date de publication et mention de la délivrance du brevet: **16.07.2025**
(21) Numéro de dépôt: 21732423.5
(22) Date de dépôt: 04.05.2021
(51) Int. Cl.: G01N 23/044, G01N 23/046

(54) **VÉRIFICATION DU POSITIONNEMENT D'UNE PRÉFORME FIBREUSE DANS UNE AUBE**
ÜBERPRÜFUNG DER POSITIONIERUNG EINER FASERIGEN VORFORM IN EINER KLINGE
VERIFYING THE POSITIONING OF A FIBROUS PREFORM IN A BLADE

(30) Priorité: 04.05.2020 FR 2004386
(43) Date de publication de la demande: 15.03.2023
(73) Titulaire: SAFRAN AIRCRAFT ENGINES, 75015 Paris (FR)
(72) Inventeur: MARCHAL, Yann Didier Simon, 77500 MOISSY CRAMAYEL (FR); BRANTEGHEM, Antonin, 77500 MOISSY CRAMAYEL (FR); SCHNEIDER-DIE-GROSS, Julien Paul, 77550 MOISSY-CRAMAYEL (FR)
(74) Mandataire: Regimbeau
(86) Numéro de dépôt international: PCT/FR2021/050766
(87) Numéro de publication internationale: WO 2021/224573

(56) Documents cités:
- FR-A1- 3 034 339
- FR-A1- 3 042 869
- EMERSON MONICA J ET AL: "Individual fibre segmentation from 3D X-ray computed tomography for characterising the fibre orientation in unidirectional composite materials", COMPOSITES PART A: APPLIED SCIENCE AND MANUFACTURING, ELSEVIER, AMSTERDAM, NL, vol. 97, 11 January 2017 (2017-01-11), pages 83 - 92, XP029972911, ISSN: 1359-835X, DOI: 10.1016/J.COMPOSITESA.2016.12.028

## Description

### DOMAINE TECHNIQUE GENERAL

L'invention concerne le domaine général des aubes de turbomachine en matériau composite et concerne un procédé de contrôle de fabrication d'une telle aube mettant en oeuvre une préforme et un moule.

### ETAT DE LA TECHNIQUE

Les matériaux composites permettent de réaliser des aubes de turbomachine, en particulier pour la soufflante de la turbomachine.

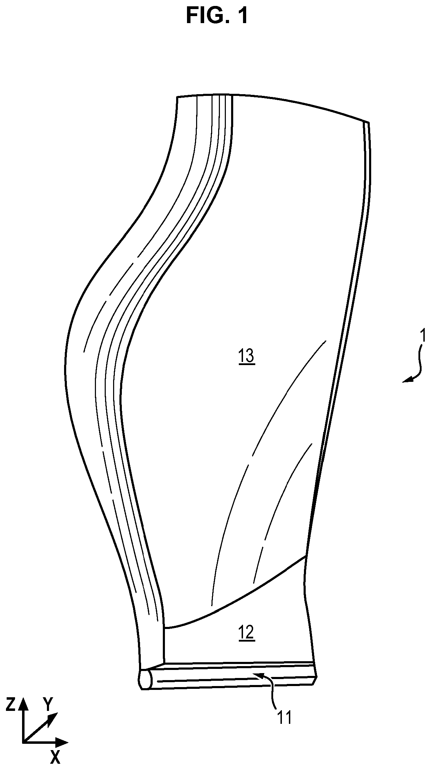

Comme illustré sur la **figure 1****,** une aube comprend classiquement un corps 1 en matériau composite fabriqué à partir d'une préforme. Cette préforme comprend un tissage d'une pluralité de fils ou fibres de tissage, qui comportent des fils de chaîne et des fils de trame. Le tissage peut être en une seule pièce obtenue par tissage tridimensionnel et peut comprendre notamment des fibres en carbone en verre, aramide et/ou céramique.

Le corps en matériau composite comprend un pied 11, une échasse 12 et une pale 13 présentant un profil aérodynamique. On définit dans ce qui suit un repère d'aube X, Y, Z : l'axe X correspond à la direction longitudinale du pied d'aube, l'axe Z correspond à la direction longitudinale selon laquelle la pale 13 s'étend depuis le pied 11, l'axe Y correspond à l'épaisseur de l'aube. Bien entendu, les axes X, Y et Z sont orthogonaux deux à deux, le repère d'aube étant orthonormé.

La préforme est découpée selon la forme et les dimensions des parties constitutives de l'aube, et placées dans un moule.

Un liant comprenant une résine thermodurcissable est ensuite injecté dans la moule, afin d'imprégner toute la préforme. Après chauffage du moule, la pièce moulée est sortie du moule. Le moulage est par exemple un procédé d'injection sous vide de résine du type RTM (en anglais, « *Resin Transfer Molding* ») ou encore VARRTM (en anglais, « *Vacuum Resin Transfer Molding* »).

Au cours, de la fabrication de l'aube, on vient donc déposer une préforme épaisse dans la cavité d'un moule d'injection. Les préformes tissées 3D sont des tissus monoblocs épais. Dans le cas d'une aube d'une soufflante de turbomachine, la préforme monobloc est d'épaisseur variable afin d'être adaptée au profil aérodynamique de l'aube (voir la figure 1).

Ainsi, lorsque l'on dépose dans un moule d'injection à épaisseur variable, cette préforme à épaisseur variable, il est important de s'assurer que celle-ci est correctement positionnée, ceci afin d'obtenir une pièce de santé matière homogène. En effet, si la zone épaisse de la préforme est mal positionnée et se retrouve dans une zone fine du moule, le taux volumique de fibre de la pièce sera grandement affecté et potentiellement non-conforme.

Ainsi, dans les deux groupes de fils prévus pour la préforme, sont prévus des fils de structure, assurant la structure de la préforme, et des fils traceurs identifiables visuellement des autres et disposés régulièrement au moins à la surface de la préforme. Ces quelques fils de verre positionnés en surface sont nommés traceurs de verre ou traceurs dans la suite de ce qui sera décrit. Ces derniers, qui représentent un quadrillage visible, permettent de repérer spatialement la préforme, et donc d'évaluer le bon positionnement de celle-ci.

Pour vérifier l'intégrité de l'aube après injection, on contrôle le positionnement de la préforme dans l'aube obtenue après injection. Le contrôle consiste dans le repère de l'aube, à mesurer la hauteur en Z suivant l'axe X du centre du traceur de verre, appelé la fibre neutre.

Pour ce faire on met en oeuvre une tomographie aux rayons X de l'aube pour s'assurer de son intégrité et pour vérifier la localisation de la fibre neutre par rapport à leur position théorique.

En particulier, grâce à la tomographie, il est possible de reconstruire la fibre neutre dans le volume tomographique et de vérifier son bon positionnement. Toutefois un tel procédé ne permet de capter que des bribes de traceurs de verre et non sa totalité et donc capter des bribes de la fibre neutre.

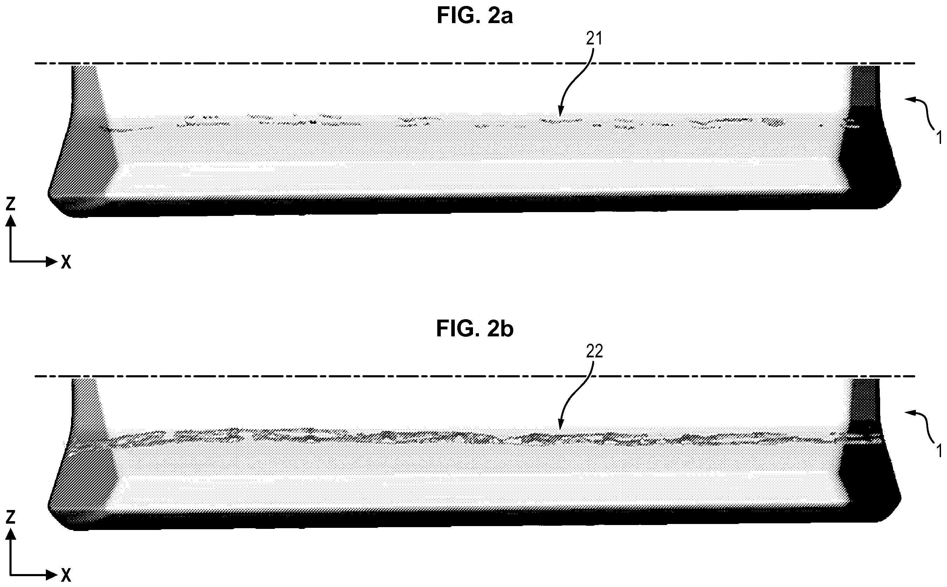

Les figures 2a et 2b, illustrent respectivement un traceur 21 partiellement détecté dans une aube 1 par tomographie X et reconstruction 3D, et un traceur théorique 22 en 2b. Un procédé de vérification du positionnement d'une préforme fibreuse dans une aube est décrit dans EMERSON MONICA J ET AL: "Individual fibre segmentation from 3D X-ray computed tomography for characterising the fibre orientation in unidirectional composite materials", COMPOSITES PART A: APPLIED SCIENCE AND MANUFACTURING, ELSEVIER, AMSTERDAM, NL, vol. 97, 11 janvier 2017 (2017-01-11), pages 83-92, ISSN: 1359-835X, DOI: 10.1016/J.COMPOSITESA.2016.12.028

Dès lors qu'il existe des imprécisions dans la détection de la fibre neutre, la vérification du bon positionnement de la préforme et donc de l'intégrité de la pièce est imprécise.

### PRESENTATION DE L'INVENTION

L'invention permet de pallier les inconvénients précités.

A cet effet, l'invention propose, selon un premier aspect décrit dans la revendication 1, un procédé de vérification du positionnement d'une préforme fibreuse dans une aube, l'aube ayant été obtenue par injection d'une résine dans un moule ayant une forme d'aube et dans lequel une préforme a été placée, l'aube s'étendant dans un repère d'aube X, Y, Z, orthonormé, l'aube comprenant un pied d'aube s'étendant longitudinalement selon un axe X, une pale s'étendant depuis le pied d'aube selon un axe Z, l'aube présentant une épaisseur définie selon un axe Y, la préforme comprenant des traceurs de verre positionnés en surface de la préforme, le centre des traceurs définissant une fibre neutre localisée à une hauteur selon l'axe Z suivant la direction définie par l'axe X, le procédé comprenant les étapes suivantes :
acquisition de projections 2D tomographiques de l'aube au moyen d'un système d'imagerie comprenant une source de rayons X, chaque projection étant acquise selon une orientation donnée de la source de rayons X par rapport à l'aube ;
cumulation des projections 2D selon la direction de l'axe Y de manière à obtenir une image 2D cumulée selon les directions x et z ;
détermination pour chaque colonne de pixel définie selon la direction de l'axe z, d'un profil de niveaux de gris ;
traitement de chacun des profils obtenus de manière à localiser la position en Z de la fibre neutre selon la direction de l'axe X.

L'invention, selon le premier aspect, est avantageusement complétée par les caractéristiques suivantes, prises seules ou en une quelconque de leur combinaison techniquement possible :
- la projection consiste à obtenir une image 2D constituée de pixels ayant le niveau de gris maximal parmi une pile de pixels des différentes coupes empilées selon la direction de l'axe Y ;
- la projection consiste en ce que l'image 2D est constituée de pixels dont le niveau de gris est la somme des pixels des différentes coupes empilées selon la direction de l'axe Y ;
- le profil de niveaux de gris est une gaussienne, la localisation de la fibre neutre étant le centre de la gaussienne ;
- le profil de niveaux de gris est une double gaussienne, la localisation de la fibre neutre étant le centre des deux gaussiennes ;
- le procédé comprend une étape de filtrage de la localisation selon la direction Z de la fibre neutre selon la direction de l'axe X ;
- le procédé comprend une étape de comparaison de la localisation de la fibre neutre ainsi obtenue à une localisation théorique de la fibre neutre.

L'invention propose, selon un deuxième aspect, un procédé de fabrication d'une aube de turbomachine en matériau composite, le procédé comprenant les étapes suivantes :
placement d'une préforme fibreuse dans un moule ayant une forme d'aube ;
injection sous vide d'une résine dans le moule comprenant la préforme de manière à obtenir l'aube dite aube injectée ;
vérification du positionnement de la préforme fibreuse dans l'aube injectée au moyen d'un procédé selon l'invention.

Selon un troisième aspect, qui n'est pas inclus dans l'objet des revendications, il est proposé une aube d'une soufflante de turbomachine obtenue par un procédé selon le deuxième aspect de l'invention.

Selon un quatrième qui n'est pas inclus dans l'objet des revendications, il est proposé un aéronef comprenant une aube de soufflante selon le troisième aspect de l'invention.

Les avantages de l'invention sont multiples. D'un point de vue temps justesse, répétabilité, reproductibilité et temps de contrôle

La précision de la détection est améliorée par rapport aux techniques connues, en particulier, d'un point de vue justesse, répétabilité, reproductibilité et temps de contrôle.

Les traitements mis en oeuvre sont rapides et nécessitent peu de ressources du fait qu'on s'affranchit d'une dimension, contrairement à la tomographie habituelle qui met en œuvre une reconstruction en 3D.

La mesure du positionnement de la fibre neutre est ainsi obtenue avec une précision élevée.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels, outre les figures 1, 2a et 2b déjà discutées :
- la figure 3 illustre des étapes d'un procédé de fabrication d'une aube de turbomachine selon l'invention ;
- la figure 4 illustre un système d'imagerie selon l'invention ;
- la figure 5 illustre des étapes d'un procédé de vérification du positionnement d'une préforme dans une aube selon l'invention ;
- la figure 6 illustre schématiquement des pixels d'une image ;
- les figures 7 et 8 illustrent des profils de niveaux de gris obtenus au moyen d'un procédé selon l'invention ;
- la figure 9 illustre une image 2D obtenue au moyen du procédé de la figure 5.

Sur l'ensemble des figures les éléments similaires portent des références identiques.

### DESCRIPTION DETAILLEE

### Présentation générale du procédé

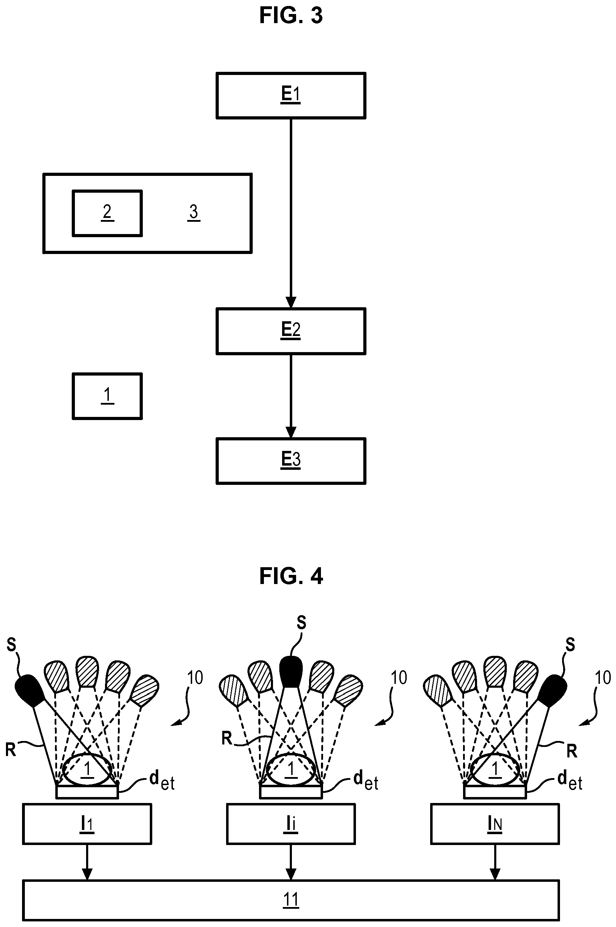

En relation avec la **figure 3****,** un procédé de fabrication d'une aube de turbomachine en matériau composite, comprend les étapes générales suivantes. Ces étapes peuvent être mises en oeuvre de différentes manières connues de l'homme du métier et ne seront pas détaillées dans la suite mais seulement présentées de manière générale (voir aussi l'introduction de la présente demande).

Une préforme fibreuse 2 est placée dans un moule 3 ayant une forme d'aube (étape E1) et une résine est injectée (étape E2) sous vide dans le moule comprenant la préforme de manière à obtenir l'aube.

Ensuite, le procédé comprend une étape de vérification (étape E3) de l'aube mettant en oeuvre notamment un système d'imagerie permettant d'obtenir des projections 2D ou images 2D. C'est à partir d'un traitement de ces projections 2D que la vérification est effectuée.

### Système d'imagerie par tomographie

La **figure 4** illustre un système d'imagerie 10 permettant d'acquérir des projections 2D d'une aube 1. Des rayons X, R issus d'une source S sont émis selon différentes angulations (1, ..., i, ..., n) vers l'aube 1. Après avoir traversé l'aube 1, ils sont détectés par un détecteur Dₑₜ formant un ensemble de projections 2D I₁, ..., Iᵢ,..., I_{N}. Il est à noter qu'il y a autant de projections 2D acquises que d'angulations considérées. L'ensemble des angulations couvre un demi-cercle autour de l'aube 1. L'acquisition est donc mise en œuvre par le détecteur Dₑₜ au-dessus duquel l'aube 1 est placée. Il s'agit par exemple d'une caméra numérique.

Les projections 2D sont ensuite traitées par une unité de traitement connectée ou faisant partie du système d'imagerie. L'unité de traitement est par exemple un processeur. Dans le cas où l'unité de traitement est distante du système d'imagerie, celle-ci est connectée de manière filaire ou sans fil au système d'imagerie. L'unité de traitement permet de mettre en œuvre des procédés de traitement d'images 2D obtenues.

### Vérification du positionnement d'une préforme fibreuse dans une aube

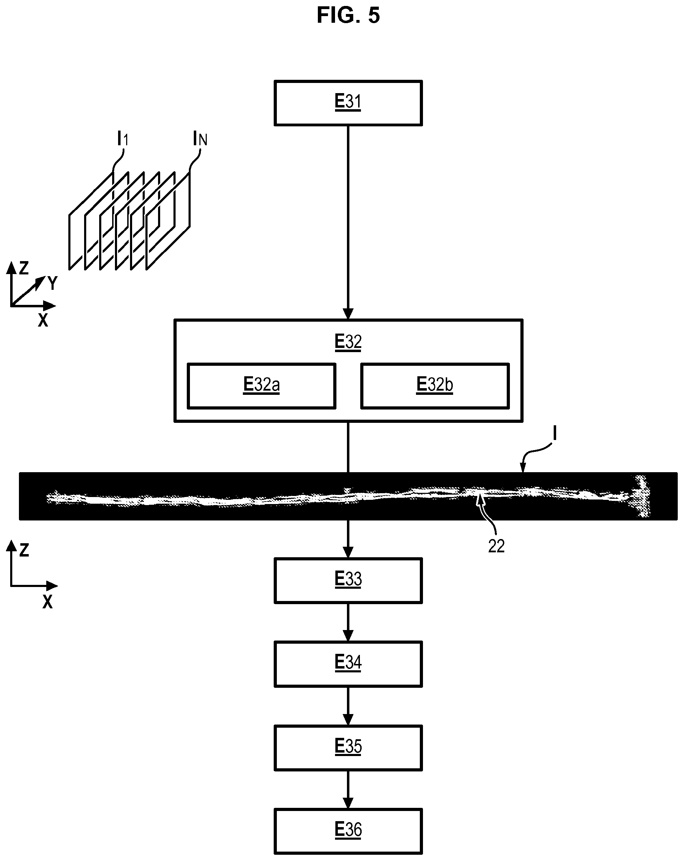

La vérification du positionnement d'une préforme fibreuse dans l'aube 1 est mise en œuvre par l'unité de traitement du système de d'imagerie 10 ci-dessus décrit. En particulier, cette vérification comprend les étapes décrites ci-après, en relation avec la **figure 5****.**

Plusieurs projections 2D tomographiques de l'aube 1 au moyen du système d'imagerie 10 sont acquises (étape E31). Chaque projection correspond à une orientation donnée de la source de rayons X par rapport à l'aube. On dispose alors de N images 2D I₁, ..., I_{N}. Chaque projection est constituée de plusieurs pixels en niveaux de gris.

Ces images 2D (sont alors cumulées (étape E32) selon l'axe Y de manière à obtenir une image 2D cumulée notée I selon les directions des axes X et Z. Dans chaque image chaque pixel a une valeur en niveau de gris. Chaque pixel P à Pₘ de l'image cumulée I est obtenu par la moyenne des niveaux de gris des pixels correspondants, suivant l'axe Y. Ces pixels cumulés ont les mêmes coordonnées en X et Z. Par cette cumulation, on s'affranchit d'une dimension, ici la dimension Y. En effet, pour évaluer le positionnement de la préforme, seules deux coordonnées suffisent, l'information de position selon la direction de l'axe Y (dans l'épaisseur de l'aube 1) s'avère peu importante pour évaluer l'intégrité de l'aube 1.

Cette cumulation revient à cumuler des informations voxéliques selon une direction.

Selon un mode de réalisation, la cumulation (étape E32a) consiste en ce que l'image 2D cumulée obtenue est constituée de pixels ayant le niveau de gris maximal parmi la pile de pixels des différentes coupes empilées selon la direction de l'axe Y. Selon ce mode de réalisation, on maximise la prise en compte de la fibre de verre uniquement, (matériau utilisé pour la fibre neutre) mais peut toutefois omettre quelques parties si le signal est trop faible.

Selon un mode de réalisation, la cumulation (étape E32b) consiste en ce que l'image 2D cumulée obtenue est constituée de pixels dont le niveau de gris est la somme des pixels des différentes projections 2D empilées selon la direction de l'axe Y. Selon ce mode de réalisation, on maximise la quantité d'information prise en compte, mais on peut détecter du signal parasite.

Ensuite, pour chaque colonne de pixel définie selon l'axe z, un profil de niveaux de gris est déterminé (étape E33). L'échelle est avantageusement une échelle de 16 bits non signée de sorte qu'il y a 65536 niveaux de gris du noir à 0 vers le blanc (65535). Ainsi, on dispose d'autant de profils que de nombre de colonnes selon la direction de l'axe Z.

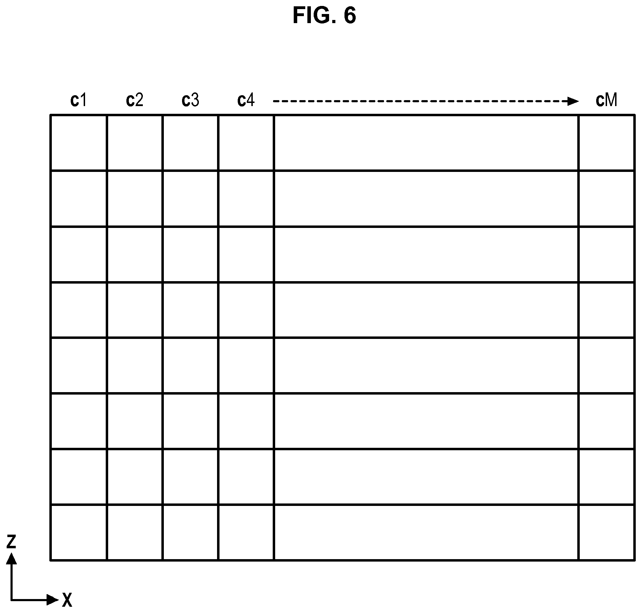

La **figure 6** illustre schématiquement une image comprenant des pixels (un carré est un pixel). Un profil consiste pour chaque colonne c1, c2, c3, c4, ..., cM en une variation du niveau de gris.

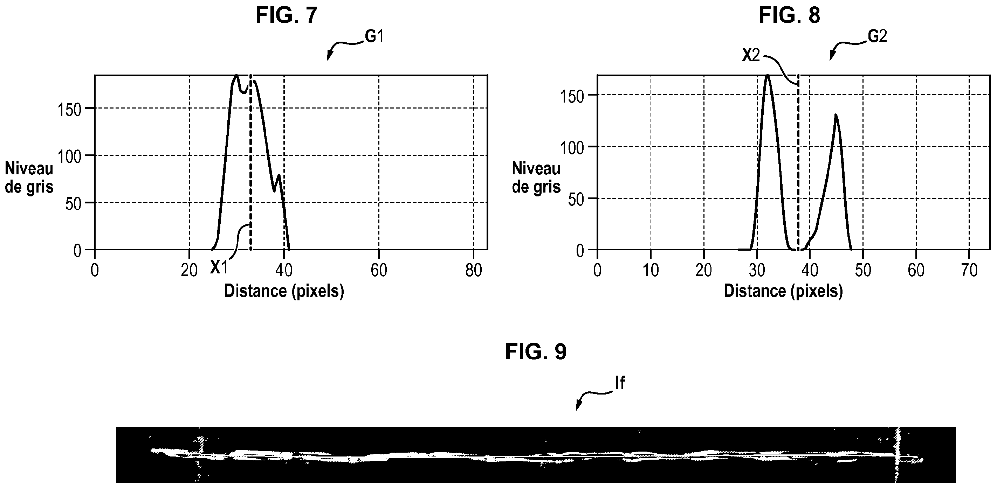

Les **figures 7** et **8** montrent deux profils selon que le traceur de verre comprend un brin (figure 7) ou deux brins (figure 8). Le profil comprend en ordonnées un niveau de gris et en abscisses une distance. Le profil de la figure 7 est une gaussienne simple mais large et le profil de la figure 8 est une double gaussienne composée de deux gaussiennes étroites. Ces deux possibilités de signature sont caractéristiques de la fibre de verre et sont les deux uniques cas de figure qui peuvent être rencontrés. En effet, la fibre de verre étant un ensemble de torons de verre et de carbone torsadés, elle apparait en tomographie par rayons X comme deux lignes blanches lorsque les torons de verre sont répartis de part et d'autre de la fibre neutre, ou comme une ligne blanche unique mais épaisse lorsque les torons se croisent au niveau de la fibre neutre.

Puis on traite (étape E34) chacun de ces profils pour localiser la fibre neutre. En effet, en se référant à l'image I de la figure 5, on comprend que le niveau de gris de chaque colonne permet d'obtenir à quelle hauteur selon l'axe Z se trouve la fibre neutre.

En particulier, le traitement consiste, dans le cas d'un profil du type de celui illustré sur la figure 7, à détecter le centre de la gaussienne et dans le cas d'un profil de celui illustré sur la figure 8, à détecter le centre des deux gaussiennes. Les valeurs détectées sont illustrées par la courbe en pointillés épaisse.

Dès lors à l'issue de l'étape de traitement (étape E34) on obtient selon l'axe X la hauteur à laquelle se trouve la fibre neutre 22.

De manière complémentaire, l'ensemble des hauteurs ainsi obtenues peut être filtré (étape E35) pour lisser les différentes valeurs et ainsi filtrer les valeurs aberrantes. De manière avantageuse, un filtrage par régression peut être mis en œuvre. La **figure 9** illustre une image 2D cumulée de la fibre neutre après filtrage. En comparaison avec l'image I de la figure 5 on constate que la courbe représentant la fibre neutre est moins bruitée.

Filtrée ou non, l'image I (figure 5) ou l'image If (figure 9) sont chacune une vue 2D de la fibre neutre de meilleure qualité que celle obtenue avec les procédés de l'art antérieur (voir la figure 2a).

Enfin, une comparaison à des cotes nominales et des tolérances prédéfinies (étape E36) de la localisation de la fibre neutre ainsi obtenue à une localisation théorique de la fibre neutre est mise en œuvre pour permettre d'évaluer l'intégrité de l'aube 1.

## Revendications

1. Procédé de vérification du positionnement d'une préforme fibreuse dans une aube, l'aube ayant été obtenue par injection d'une résine dans un moule ayant une forme d'aube et dans lequel une préforme a été placée, l'aube s'étendant dans un repère d'aube X, Y, Z, orthonormé, l'aube comprenant un pied d'aube s'étendant longitudinalement selon un axe X, une pale s'étendant depuis le pied d'aube selon un axe Z, l'aube présentant une épaisseur définie selon un axe Y, la préforme comprenant des traceurs de verre positionnés en surface de la préforme, le centre des traceurs définissant une fibre neutre localisée à une hauteur selon l'axe Z suivant la direction définie par l'axe X, le procédé comprenant les étapes suivantes :
acquisition (E31) de projections 2D tomographiques de l'aube au moyen d'un système d'imagerie comprenant une source de rayons X, le procédé étant **caractérisé en ce que** pendant l'acquisition, chaque projection étant acquise selon une orientation donnée de la source de rayons X par rapport à l'aube ;
cumulation (E32, E32a, E32b) des projections 2D selon la direction de l'axe Y de manière à obtenir une image 2D cumulée selon les directions x et z ; le procédé étant caractérisé en plus en comprenant les étapes suivantes:
détermination (E33) pour chaque colonne de pixel définie selon la direction de l'axe z, d'un profil de niveaux de gris ;
traitement (E34) de chacun des profils obtenus de manière à localiser la position en Z de la fibre neutre selon la direction de l'axe X.

2. Procédé selon la revendication 1, dans lequel la cumulation (E32a) consiste à obtenir une image 2D cumulée constituée de pixels ayant le niveau de gris maximal parmi une pile de pixels des différentes coupes empilées selon la direction de l'axe Y.

3. Procédé selon la revendication 1, dans lequel la projection (étape E32b) consiste en ce que l'image 2D cumulée est constituée de pixels dont le niveau de gris est la somme des pixels des différentes coupes empilées selon la direction de l'axe Y.

4. Procédé selon l'une des revendications précédentes, dans lequel le profil (G1) de niveaux de gris est une gaussienne, la localisation de la fibre neutre étant le centre (X1) de la gaussienne.

5. Procédé selon l'une des revendications 1 à 4, dans lequel le profil (G2) de niveaux de gris est une double gaussienne, la localisation de la fibre neutre étant le centre (X2) des deux gaussiennes.

6. Procédé selon l'une des revendications précédentes, comprenant une étape (E35) de filtrage de la localisation selon la direction Z de la fibre neutre selon la direction de l'axe X.

7. Procédé selon l'une des revendications précédentes, comprenant une étape (E36) de comparaison (E35) de la localisation de la fibre neutre ainsi obtenue à une localisation théorique de la fibre neutre.

8. Procédé de fabrication d'une aube de turbomachine en matériau composite, le procédé comprenant les étapes suivantes :
placement d'une préforme fibreuse dans un moule ayant une forme d'aube ;
injection sous vide d'une résine dans le moule comprenant la préforme de manière à obtenir l'aube dite aube injectée ;
vérification du positionnement de la préforme fibreuse dans l'aube injectée au moyen d'un procédé selon l'une des revendications précédentes.

## Patentansprüche

1. Verfahren zur Überprüfung der Positionierung einer faserigen Vorform in einer Schaufel, wobei die Schaufel durch Einspritzen eines Harzes in eine Form mit einer Schaufelform erhalten wurde, und in die eine Vorform eingesetzt wurde, wobei sich die Schaufel in einem orthonormierten Schaufelkoordinatensystem X, Y, Z erstreckt, wobei die Schaufel einen sich längs gemäß einer X-Achse erstreckenden Schaufelfuß umfasst, wobei sich ein Blatt ab dem Schaufelfuß gemäß einer Z-Achse erstreckt, wobei die Schaufel eine gemäß einer Y-Achse definierte Dicke aufweist, wobei die Vorform an der Oberfläche der Vorform positionierte Glasmarker umfasst, wobei die Mitte der Marker eine neutrale Faser definiert, die in einer Höhe gemäß der Z-Achse in der durch die X-Achse definierten Richtung lokalisiert ist, wobei das Verfahren die folgenden Schritte umfasst:
Erfassen (E31) von tomographischen 2D-Projektionen der Schaufel mittels eines Bildgebungssystems, das eine Röntgenstrahlungsquelle umfasst, wobei das Verfahren **dadurch gekennzeichnet ist, dass** während der Erfassung jede Projektion gemäß einer gegebenen Ausrichtung der Röntgenstrahlungsquelle in Bezug auf die Schaufel erfasst wird;
Kumulieren (E32, E32a, E32b) der 2D-Projektionen gemäß der Richtung der Y-Achse derart, dass ein kumuliertes 2D-Bild gemäß den Richtungen x und z erhalten wird; wobei das Verfahren weiterhin gekennzeichnet ist, dass es die folgenden Schritte umfasst:
Bestimmen (E33) eines Graustufenprofils für jede Pixelsäule, die gemäß der z-Achse definiert ist;
Verarbeiten (E34) jedes der erhaltenen Profile derart, dass die Z-Position der neutralen Faser gemäß der X-Achse lokalisiert wird.

2. Verfahren nach Anspruch 1, wobei die Kumulierung (E32a) darin besteht, ein kumuliertes 2D-Bild zu erhalten, das aus Pixeln mit der maximalen Graustufe eines Pixelstapels der verschiedenen Schnitte besteht, die gemäß der Richtung der Y-Achse gestapelt sind.

3. Verfahren nach Anspruch 1, wobei die Projektion (Schritt E32b) darin besteht, dass das kumulierte 2D-Bild aus Pixeln besteht, deren Graustufe die Summe der Pixel der verschiedenen Schnitte ist, die gemäß der Richtung der Y-Achse gestapelt sind.

4. Verfahren nach einem der vorstehenden Ansprüche, wobei das Graustufenprofil (G1) eine Gaußsche Verteilung ist, wobei die Lokalisierung der neutralen Faser der Mittelpunkt (X1) der Gaußschen Verteilung ist.

5. Verfahren nach einem der Ansprüche 1 bis 4, wobei das Graustufenprofil (G2) eine doppelte Gaußsche Verteilung ist, wobei die Lokalisierung der neutralen Faser der Mittelpunkt (X2) der beiden Gaußschen Verteilungen ist.

6. Verfahren nach einem der vorstehenden Ansprüche, umfassend einen Schritt (E35) des Filterns der Lokalisierung gemäß der Z-Richtung der neutralen Faser gemäß der Richtung der X-Achse.

7. Verfahren nach einem der vorstehenden Ansprüche, umfassend einen Schritt (E36) des Vergleichens (E35) der derart erhaltenen Lokalisierung der neutralen Faser mit einer theoretischen Lokalisierung der neutralen Faser.

8. Verfahren zur Herstellung einer Turbinenschaufel aus Verbundwerkstoff, wobei das Verfahren die folgenden Schritte umfasst:
Platzieren einer faserigen Vorform in einer Form mit einer Schaufelform;
Einspritzen eines Harzes unter Vakuum in die Form, die die Vorform umfasst, derart, dass die als eingespritzte Schaufel bezeichnete Schaufel erhalten wird;
Überprüfen der Positionierung der faserigen Vorform in der eingespritzten Schaufel mittels eines Verfahrens nach einem der vorstehenden Ansprüche.

## Claims

1. A method for checking the positioning of a fibrous preform in a blade, the blade having been obtained by injecting a resin into a mould having a blade shape and into which a preform has been placed, the blade extending in an orthonormal blade reference frame X, Y, Z, the blade comprising a blade root extending longitudinally along an X axis an airfoil extending from the blade root along a Z axis, the blade having a thickness defined along a Y axis, the preform comprising glass tracers positioned on the surface of the preform, the centre of the tracers defining a neutral fibre located at a height along the Z axis in the direction defined by the X axis, the method comprising the following steps:
acquiring (E31) tomographic 2D projections of the blade by means of an imaging system comprising an X-ray source, the method being **characterized in that**, during the acquisition, each projection is acquired according to a given orientation of the X-ray source with respect to the blade;
accumulating (E32, E32a, E32b) the 2D projections in the direction of the Y axis so as to obtain an accumulated 2D image in the x and z directions; the method being further **characterised by** comprising the following steps:
determining (E33) a greyscale profile for each pixel column defined in the direction of the z axis;
processing (E34) of each of the profiles obtained so as to locate the Z position of the neutral fibre in the direction of the X axis.

2. A method according to claim 1, wherein the accumulating (E32a) consists in obtaining a cumulated 2D image consisting of pixels having the maximum grey level from a stack of pixels of the different slices stacked in the direction of the Y axis.

3. Method according to claim 1, in which the projection (step E32b) consists in the fact that the cumulated 2D image is made up of pixels whose grey level is the sum of the pixels of the different slices stacked in the direction of the Y axis.

4. Method according to one of the preceding claims, in which the grey level profile (G1) is a Gaussian, the location of the neutral fibre being the centre (X1) of the Gaussian.

5. Method according to one of claims 1 to 4, in which the grey level profile (G2) is a double Gaussian, the location of the neutral fibre being the centre (X2) of the two Gaussians.

6. Method according to one of the preceding claims, comprising a step (E35) of filtering the location in the Z direction of the neutral fibre in the direction of the X axis.

7. Method according to one of the preceding claims, comprising a step (E36) of comparing (E35) the location of the neutral fibre thus obtained with a theoretical location of the neutral fibre.

8. A method of manufacturing a composite turbomachine blade, the method comprising the following steps:
placing a fibrous preform in a balde-shaped mould;
vacuum injection of a resin into the mould comprising the preform so as to obtain the injected blade;
checking the positioning of the fibre preform in the injected vane by means of a process according to one of the preceding claims.
